# EUROPEAN PATENT SPECIFICATION

(11) **EP 3 924 099 B1**
(45) Date of publication and mention of the grant of the patent: **21.08.2024**
(21) Application number: 20710022.3
(22) Date of filing: 14.02.2020
(51) Int. Cl.: B01J 4/00, C08L 9/00, C08L 21/00, C08C 1/02

(54) **METHOD OF FORMING ARTICLES FROM ACRYLONITRILE-BUTADIENE-STYRENE**
FILTER ZUR HERSTELLUNG VON GUMMI ODER LATEX UND VERFAHREN ZUR VERWENDUNG DAVON
FILTRE DE PRODUCTION DE CAOUTCHOUC OU DE LATEX ET SON PROCÉDÉ D'UTILISATION

(30) Priority: 14.02.2019 EP 19157070
(43) Date of publication of application: 22.12.2021
(73) Proprietor: SABIC Global Technologies B.V., 4612 PX Bergen op Zoom (NL)
(72) Inventor: CHEN, Chen, Singapore 639798 (SG); XU, Jianhua, Mount Vernon, Indiana 47620-9367 (US); LOWRY, Vern, Ottawa, Illinois 61350 (US); ZHOU, Bing, Mount Vernon, Indiana 47620 (US); WAN, Chen, Baytown, Texas 77520 (US); MANICA, Drew Prentice, Evansville, Indiana 47720 (US); YOUNGSTROM, Cameron Royal, Washington, West Virginia 26101 (US)
(74) Representative: Sabic Intellectual Property Group
(86) International application number: PCT/US2020/018275
(87) International publication number: WO 2020/168180

(56) References cited:
- DE-A1- 10 016 011
- US-A- 4 064 093
- US-A- 5 501 804
- US-A1- 2003 189 014

## Description

### BACKGROUND

Rubber and latex are produced via the polymerization of petrochemical monomers. For example, polybutadiene is a synthetic rubber polymer formed from the polymerization of butadiene monomer. Polybutadiene has a high resistance to wear and a high electrical resistivity. Polybutadiene can be used in the manufacture of tires and can also be used as an additive to improve the impact resistance of plastics, for example, polystyrene and acrylonitrile-butadiene-styrene (ABS). Polybutadiene rubber accounted for approximately 25% of total global consumption of synthetic rubbers in 2012. Polybutadiene can also be used to manufacture golf balls, elastic objects, and electronic assembly coatings.

ABS copolymer resins in particular are engineering thermoplastics used in electronics, appliances, business equipment, and automobile parts. Many ABS production processes involve the emulsion polymerization of butadiene monomer. During the emulsion polymerization process, formation of over crosslinked polybutadiene gels, rubber particle agglomerates, degraded rubber particles, fibrous materials, coagulates, and other contaminates, can lead to downstream defects in final ABS products. These defects degrade product quality in applications requiring low contaminant levels, for example, in film, laminating, painting, and electroplating.

DE 10016011 A1 includes a system for separating the particulate products of a suspension polymerisation from the liquid medium and any by-products, unreacted starting materials and/or catalyst, wherein the liquid suspension medium passes through screen(s) and/or filter(s). US 4,064,093 A includes a process for preparing a latex comprising grafted rubber particles for ABS blends, the process comprising preparing said latex and passing it through a porous filter bed means comprising agglomerated particles of said latex, removing coagulum, and producing a filtered latex.

Accordingly, it would be desirable to discover improved rubber and latex production processes, for example, improved polybutadiene and ABS production processes, which result in reduced crosslinking gels, degraded rubber particles, fibrous materials, coagulates, and other agglomerate contaminates. It would be further desirable if such a process also resulted in reduced fouling, corrosion, and final product defect formation. It would be further beneficial still if such a process could reduce the need for butadiene washing, butadiene distillation, styrene cleaning, and/or other cleaning of inert and/or retarding components.

### SUMMARY

Disclosed, in various embodiments, are a method of forming articles from acrylonitrile-butadiene-styrene.

A method of forming articles from acrylonitrile-butadiene-styrene, the method comprising: feeding a monomer stream comprising a petrochemical monomer into a reactor; contacting the petrochemical monomer with a polymerization activator within the reactor to produce a polymerized stream comprising rubber, latex, or a combination thereof and withdrawing the polymerized stream from the reactor; passing the polymerized stream through a filter to produce a filtered product stream, wherein the filter is a continuously self-cleaning filter; passing the filtered product stream through a grafting unit comprising acrylonitrile and styrene to produce acrylonitrile-butadiene-styrene; and forming an article from the acrylonitrile-butadiene-styrene, wherein the article is an extruded sheet, a molded part, or a combination thereof.

A system for forming articles from acrylonitrile-butadiene-styrene, the system comprising: a monomer stream comprising a petrochemical monomer; a reactor, wherein the petrochemical monomer is contacted with a polymerization activator within the reactor to produce a polymerized stream comprising rubber, latex, or a combination thereof; a filter, wherein the polymerized stream is passed through the filter to produce a filtered product stream, wherein the filter is a continuously self-cleaning filter; a grafting unit, wherein the filtered product stream is passed through the grafting unit comprising acrylonitrile and styrene to produce acrylonitrile-butadiene-styrene; and an extrusion unit, a molding unit, or a combination thereof, wherein an article is formed from the acrylonitrile-butadiene-styrene, wherein the article is an extruded sheet, a molded part, or a combination thereof.

These and other features and characteristics are more particularly described below.

### BRIEF DESCRIPTION OF THE DRAWING

The following is a brief description of the drawing wherein like elements are numbered alike and which is presented for the purposes of illustrating the exemplary embodiments disclosed herein and not for the purposes of limiting the same.
FIG. 1 is a simplified schematic diagram representing a unit configuration used in a method of forming articled from acrylonitrile-butadiene-styrene.
FIG. 2 is a simplified schematic diagram representing an internal view of a filter used in a method of forming articled from acrylonitrile-butadiene-styrene.
FIG. 3 is a simplified schematic diagram representing an external view of a filter used in a method of forming articled from acrylonitrile-butadiene-styrene.

### DETAILED DESCRIPTION

The method disclosed herein can reduce crosslinking gels, coagulates, and agglomerate contaminates, reduce fouling and corrosion, reduce final product defect formation, and reduce need for butadiene washing, butadiene distillation, styrene cleaning, and/or other cleaning of inert and/or retarding components. The method disclosed herein can provide a product with no substantial detectable amounts of gel, for example, less than about 25 parts per million by weight (ppm). The method disclosed herein can also provide a product wherein a substantial amount of the polymer has not been exposed to a crosslinking treatment and therefore does not suffer from restricted molecular mobility which may tend to limit the extension of the polymer under loading.

The method disclosed herein for forming articled from acrylonitrile-butadiene-styrene can include feeding a monomer stream comprising petrochemical monomer into a reactor. For example, the method and filter disclosed herein can be used for the production of polybutadiene, styrene-butadiene, nitrile rubber, acrylics, for example, polymethyl acrylate, or a combination comprising at least one of the foregoing. The method and filter disclosed herein can be used for any rubber or latex production process that involves the removal of coagulate and/or agglomerated particles. For example, the petrochemical monomer can comprise butadiene. The butadiene monomer in the monomer stream can be contacted with an emulsion mixture within the reactor to produce a polymerized stream comprising polybutadiene. For example, a polymerization reaction can take place within the reactor. In the continuous production of polymers by free-radical polymerization, different types of reactors, including continuous-flow stirred tank reactors, tower reactors, horizontal linear flow reactors, tubular reactors, and screw-type reactors, are commonly used.

The reactor can comprise a gas distributor, reflux liquid distributor, feed tray, packing tray, vacuum jacket, inner thermocouples located along a height of the reactor, spiral-prismatic packing, automated flow rate control, automated temperature control, automated pressure control, automated level control, automated composition control, or a combination comprising at least one of the foregoing. The reactor can comprise computer-controlled pumps/compressors. These pumps can control the reactor parameters, for example, flowrates of streams entering and exiting the reactor. The reactor and related streams can be heated using heat exchangers, for example, a Proportional-Integral-Derivative (PID) controlled electronic heater.

A stirred tank reactor can be an agitated, jacketed pressure vessel, with a provision for an overhead condenser for solvent or monomer reflux. Reactors other than stirred tanks may be functionally equivalent to stirred tanks. For example, loop reactors can be used for solution and slurry-phase catalytic olefin polymerizations. In a loop reactor, the agitator in the stirred tank is replaced by a circulation pump. The loop reactor can consist of a jacketed pipe and can include several tube sections connected in series. Due to the very high circulation rate of the reaction mixture, the operation (design equation) of a loop reactor can be approximated by that of a well-stirred tank vessel.

A fixed bed reactor can be a reactor in which the catalyst remains stationary in the reactor and the catalyst particles are arranged in a vessel, generally a vertical cylinder, with the reactants and products passing through the stationary bed. In a fixed bed reactor, the catalyst particles can be held in place, stationary, with respect to a fixed reference frame. The fixed bed reactor may be an adiabatic single bed, a multi-tube surrounded with heat exchange fluid or an adiabatic multi-bed with internal heat exchange, among others. Fixed bed reactors can also be referred to as packed bed reactors. Fixed bed reactors can provide gas solids contacting.

In a moving bed catalytic reactor, gravity can cause the catalyst particles to flow while maintaining their relative positions to one another. The bed can move with respect to the reactor in which it is contained. The reactants can move through this bed with concurrent, countercurrent or crossflow. The moving bed can allow withdrawal of catalyst particles continuously or intermittently so they can be regenerated outside the reactor and reintroduced later on. A moving bed reactor may comprise at least one tray as well as supporting means for one or more catalyst beds. The supporting means can be permeable to gas and impermeable to catalyst particles.

A fluidized bed reactor can be used to carry out a variety of multiphase chemical reactions. In this type of a reactor, a gas can be passed through the catalyst at high enough velocities to suspend the solid and cause it to behave as though it were a fluid. The catalyst particles can be supported by a porous plate. The gas can be forced through the porous plate up through the solid material. At lower gas velocities the solids can remain in place as the gas passes through the voids in the material. As the gas velocity is increased, the reactor can reach a stage where the force of the fluid on the solids is enough to balance the weight of the solid material and above this velocity the contents of the reactor bed can begin to expand and swirl around much like an agitated tank or boiling pot of water. A fluidized bed reactor can provide uniform particle mixing, uniform temperature gradients, and the ability to operate the reactor in a continuous state. The catalyst can leave the reaction zone with the reaction products and can be separated therefrom in order to be regenerated before being recycled to tire reaction zone.

A conjugated di-olefin and optionally a copolymerizable olefin can be polymerized within the reactor. Examples of conjugated di-olefin monomers include butadiene-1,3,2-chlorobutadiene-1,3, isoprene, piperylene, chloroprene, cyclobutadiene-1,3,2-phenylbutadiene, 2,3-dimethylbutadiene-1,3 and the like. Representative examples of the copolymerizable olefin monomers include aryl olefins such as styrene, vinyl naphthylene, alphamethylstyrene, parachlorostyrene and the like; alpha-methylenecarboxylic acids and their esters, amides and nitriles such as acrylic acid, methacrylic acid, acrylonitrile, methacrylamide, and the like, and vinyl halides such as vinylidene chloride, vinyl bromide and the like.

A temperature of the polymerization reaction within the reactor can be from 0 to 50°C, preferably from 0 to 25°C, more preferably from 5 to 20°C, more preferably from 0 to 15'C. A pressure within the reactor can be from 0 kiloPascals to 200 kiloPascals, preferably from 50 kiloPascals to 150 kiloPascals, more preferably from 75 kiloPascals to 12.5 kiloPascals.

The emulsion mixture can comprise water, a surfactant, and a polymerization activator composition. For example, the emulsion mixture can comprise styrene, butadiene, fatty acid soap, rosin acid soap, electrolyte, chelated iron complex, sodium formaldehyde sulfoxylate, ter-dodecyl mercaptane, di--isopropylbenzene hydroperoxide, p--inethanehydroperoxicle, or a combination comprising at least one of the foregoing.

The polymerized stream comprising polymerized petrochemical monomer, for example, polybutadiene can be withdrawn from the reactor and can then be passed through a filter. A volumetric flow rate of the polymerized stream through the filter can be from 0.1 cubic meters per second to 5 cubic meters per second, for example, 0.5 cubic meters per second to 1.5 cubic meters per second.

The filter can comprise a shell and comprises a body. For example, the body can be a cylindrical body. The shell and the body can comprise a corrosion resistant material, preferably stainless steel. The body comprises an inner surface, an outer surface, and openings. For example, the openings can be slits. The polymerized stream can be passed from the inner surface to the outer surface via the openings to remove a particulate contaminate from the polymerized stream. The cylindrical body can allow the polymerized stream to pass through the openings while trapping unwanted particulate contaminates, thus removing particulate contaminates from the polymerized stream. For example, the particular contaminants can comprise crosslinked gel, for example, crosslinked polybutadiene gel, agglomerated rubber particles, degraded rubber particles, fibrous material, coagulate, dirt, rust, or a combination comprising at least one of the foregoing. The openings have from 1 micrometer to 500 micrometers in diameter, for example, 30 micrometers to 70 micrometers in diameter. For example, the openings can be from 40 micrometers to 60 micrometers in diameter, preferably from 45 micrometers to 55 micrometers in diameter.

The filter further comprises a mechanized scrubber which contacts the inner surface of the body at a timed interval, thus removing any accumulated particulate contaminate from the body. For example, the mechanized scrubber can scrape particulate contaminate from the inner surface of the body, pushing particulate contaminate downward toward one end of the body. The timed interval for the mechanized scrubber can be from 0.5 hours to 2.5 hours, preferably 1 hour to 1.5 hours. In order to facilitate movement of the mechanized scrubber, the mechanized scrubber can comprise a solenoid mechanism, a spring loaded mechanism, a magnetic drive mechanism, or a combination comprising at least one of the foregoing.

The filter can further comprise a mechanized valve which opens at a timed interval and is located at an end of the body, allowing particulate contaminate to be removed from the filter. The timed interval for the mechanized valve can be longer than the timed interval for the mechanized scrubber, thus allowing accumulation of particulate contaminate before release from the filter via the mechanized valve. The timed interval for the mechanized valve can be from 1 hour to 5 hours, preferably from 3 hours to 4 hours. In order to facilitate movement of the mechanized valve, the mechanized valve can comprise a solenoid mechanism, a spring loaded mechanism, a magnetic drive mechanism, or a combination comprising at least one of the foregoing. The mechanized valve and mechanized scrubber described herein can allow the filter to be "self-cleaning" and to operate continuously without clogs or maintenance.

The filtered product stream can comprise greater than or equal to 99% or a polymerized petrochemical monomer by weight after passing through the filter. For example, the filtered product stream can comprise greater than or equal to 99% polybutadiene by weight after passing through the filter, preferably greater than or equal to 99.9% polybutadiene by weight. The filtered product stream can also comprise less than or equal to 25 ppm of a particulate contaminant after passing through the filter, preferably less than or equal to 10 ppm, more preferably less than or equal to 5 ppm, more preferably less than or equal to 4 ppm. A diameter of a particulate contaminant particle can be less than or equal to 10 micrometers, for example, less than or equal to 5 micrometers, for example, less than or equal to 1 micrometer. Particle diameter can be measured by any suitable method for, for example, in accordance with ISO 13320:2020.

A volume of the filtered product stream can be further passed through a screen after passing through the filter. For example, the screen can be a mesh screen. The volume of the filtered product stream passed through the screen can be from 5 cubic decimeters to 30 cubic decimeters, preferably from 10 cubic decimeters to 20 cubic decimeters, more preferably from 14 cubic decimeters to 16 cubic decimeters, more preferably 15 cubic decimeters. This process can allow for assessment of the upstream filter. For example, the upstream filter is functioning better if less particulate contaminate is trapped by the screen. The screen can comprise stainless steel and openings in the stainless steel, wherein the openings are from 1 micrometer to 500 micrometers in diameter, for example, 40 micrometers to 60 micrometers in diameter, preferably from 40 micrometers to 50 micrometers, more preferably from 40 micrometers to 45 micrometers, more preferably 43 micrometers.

A portion of the filtered product stream can be further passed through a grafting unit comprising acrylonitrile and styrene to produce acrylonitrile-butadiene-styrene. An article can further be formed from the acrylonitrile-butadiene-styrene, via an extrusion unit, a molding unit, or a combination thereof, for example, the article can be an extruded sheet, a molded part, or a combination thereof. For example, the article can be an electronic device, an automotive part, or a combination thereof.

The article can also be substantially free from visible surface defects (e.g., bumps, bubbles, and lumps). For example, a surface of the article can have no visible surface defects as determined by an unaided eye having 20/20 vision in accordance with a Snellen chart. A surface of the article can have an average surface roughness value (Ra) of less than or equal to about 10 micrometers, for example, less than or equal to about 1 micrometer, for example, less than or equal to about 0.5 micrometers. The average surface roughness value (Ra) can be measured by any suitable method, for example, a method in accordance with ISO 4287:1997.

The monomer stream, the polymerized stream, the filtered product stream, the acrylonitrile-butadiene-styrene, or a combination thereof, can be stored in a storage vessel in between any of the method steps described herein. For example, the filtered product stream can be stored in a storage vessel for a period of time prior to being passed through the grafting unit.

A more complete understanding of the components, processes, and apparatuses disclosed herein can be obtained by reference to the accompanying drawings. These figures (also referred to herein as "FIG.") are merely schematic representations based on convenience and the ease of demonstrating the present disclosure, and are, therefore, not intended to indicate relative size and dimensions of the devices or components thereof and/or to define or limit the scope of the exemplary embodiments. Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

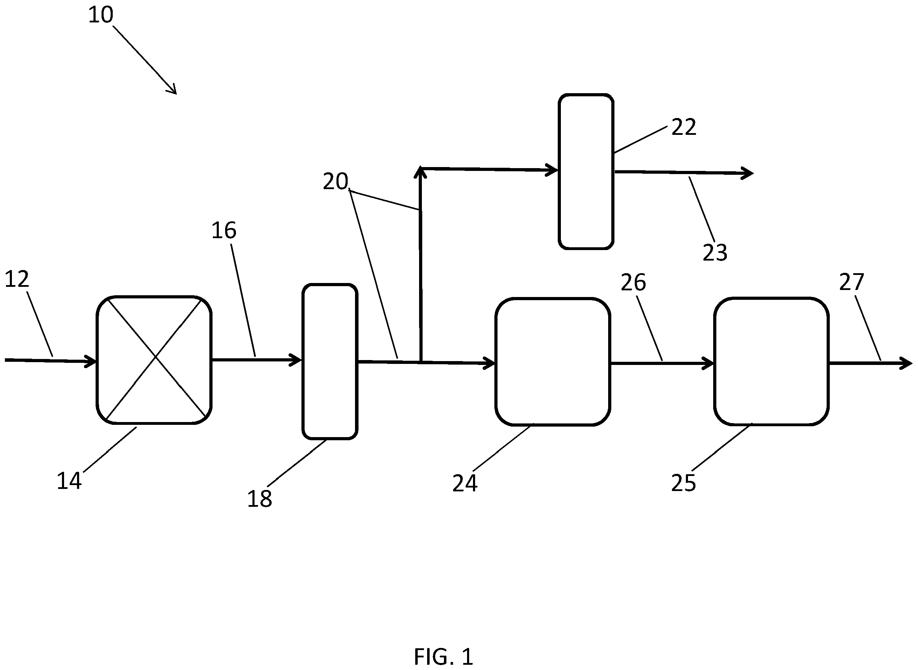

Referring now to FIG. 1, system 10 for forming articles from acrylonitrile-butadiene-styrene can include feeding a monomer stream 12 comprising petrochemical monomer, for example, butadiene monomer into a reactor 14. The petrochemical monomer in the monomer stream 12 can be contacted with an emulsion mixture within the reactor 14 to produce a polymerized stream 16 comprising a polymerized petrochemical monomer, for example, polybutadiene. The emulsion mixture can comprise water, a surfactant, and polymerization activator composition. The polymerized stream 16 can be withdrawn from the reactor 14 and the polymerized stream 16 can then be passed through a filter 18 to produce a filtered product stream 20. The filtered product stream 20 can be further passed through a grafting unit 24 comprising acrylonitrile and styrene to produce acrylonitrile-butadiene-styrene 26. The system 10 can further comprise an extrusion unit, a molding unit, or a combination thereof 25, wherein an article 27 can formed from the acrylonitrile-butadiene-styrene 26, wherein the article 27 can an extruded sheet, a molded part, or a combination thereof. Additionally, a volume of the filtered product stream 20 can be further passed through a screen 22 after passing through the filter 18 to form a secondary filtered product stream 23.

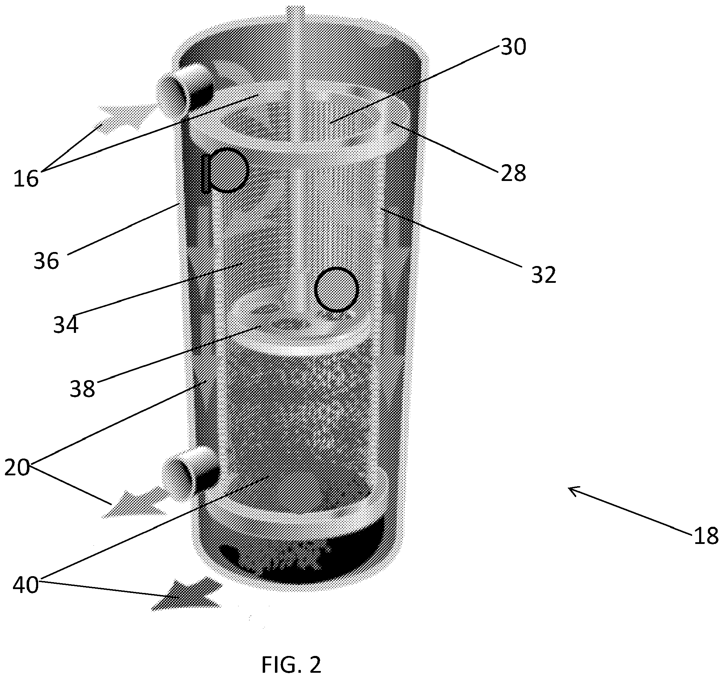

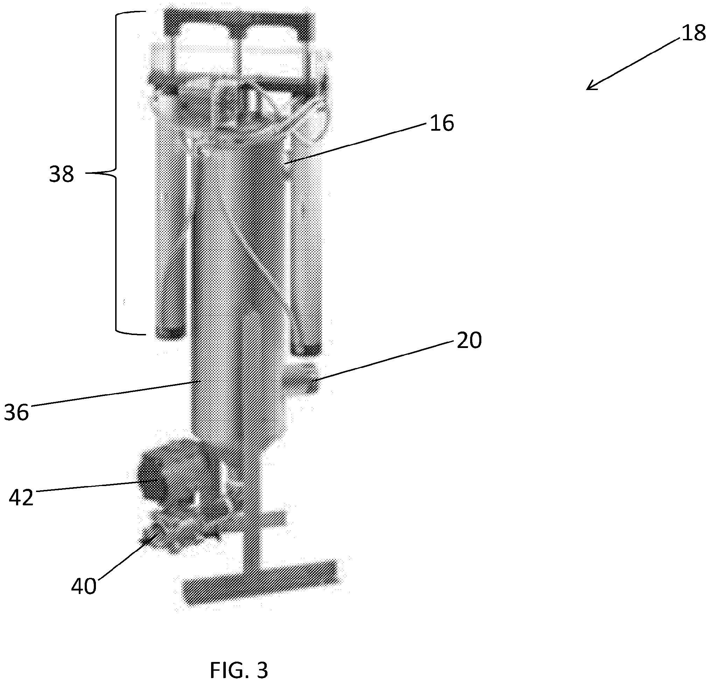

Referring now to FIGS. 2 and 3, the filter 18 can comprise a shell 36 and a cylindrical body 28. The cylindrical body 28 can comprise an inner surface 30, an outer surface 32, and openings 34. The polymerized stream 16 can be passed from the inner surface 30 to the outer surface 32 via the openings 34 to remove a particulate contaminate 40 from the polymerized stream 16. The openings 34 can be from 1 micrometer to 500 micrometers in diameter, for example, 30 micrometers to 70 micrometers in diameter. The filter 18 can further comprise a mechanized scrubber 38 which contacts the inner surface 30 of the cylindrical body 28 at a timed interval, thus removing a particulate contaminate 40 from the cylindrical body 28. The filter 18 can further comprise a mechanized valve 42 which opens at a timed interval and is located at an end of the cylindrical body 28, allowing the particulate contaminate 40 to be removed from the filter 18.

The following examples are merely illustrative of the method and system described herein for forming articles from acrylonitrile-butadiene-styrene and are not intended to limit the scope hereof.

### EXAMPLES

Experimental trials were conducted using a method and system described herein for forming articles from acrylonitrile-butadiene-styrene as shown in FIG. 1-3.

### Example 1

Particulate contaminate levels in polybutadiene latex were evaluated. Polybutadiene product was passed through a filter (as shown in FIG. 2) and then passed through different stainless steel mesh screens for particulate contaminate evaluation purposes. The sample size of the polybutadiene product and the size of the openings in the mesh screen were varied. The polybutadiene sample was drained through a mesh screen placed at the end of a funnel. The mass of the stainless steel screen and the mass of the screen with particulate contaminates were measured for each test. Contaminate level was calculated based on the weight of particulate contaminate filtered out and the bulk mass of the sample tested. Results are shown in Table 1 and Table 2.

A sample size of 15.1 liters was shown to be most repeatable due to the low level of contaminate in the polybutadiene product. A mesh opening size of 43 micrometers was shown to be most effective in filtering out particulate contaminates.

| Table 1. Contamination level, sample size (with mesh screen) | | | |
|---|---|---|---|
| Sample Size | Average (ppm) | Standard Deviation (ppm) | Relative Standard Deviation (%) |
| 3.8 liters | 18.7 | 6.2 | 33.1 |
| 7.6 liters | 15.0 | 7.7 | 51.6 |
| 15.1 liters | 11.5 | 2.0 | 17.6 |

| Table 2. Contamination level, mesh size (with 15.1 liter samples) | | | |
|---|---|---|---|
| Mesh Size | Average (ppm) | Standard Deviation (ppm) | Relative Standard Deviation (%) |
| 100 | 17.2 | 4.0 | 23.2 |
| 145 | 17.9 | 11.6 | 65.1 |
| 150 | 17.0 | 13.5 | 79.1 |
| 325 | 20.3 | 4.2 | 20.6 |

### Example 2

Samples of both filtered and unfiltered polybutadiene latex were evaluated. Samples were filtered through a stainless steel mesh screen with 43 micrometer openings. The contaminate levels are shown in Table 3. As shown, the filtration process significantly reduced particulate contaminant levels in the polybutadiene latex samples.

| Table 3. Contaminate levels for filtered and un-filtered polybutadiene | | | |
|---|---|---|---|
| Sample # | Sample Description | Contaminate level (ppm) | Average Contaminate level (ppm) |
| 1 | Unfiltered | 42.9 | 30.9 |
| 2 | Unfiltered | 33.0 | |
| 3 | Unfiltered | 16.8 | |
| 4 | Filtered | 3.9 | 7.8 |
| 5 | Filtered | 7.6 | |
| 6 | Filtered | 11.9 | |

### Example 3

A self-cleaning filter unit (as shown in FIG. 2) was evaluated as compared to a conventional static basket filter. The filter units were purchased from RPA Process Technologies (now Eaton Corporation) and were constructed from stainless steel. Polybutadiene latex product was pumped through 50 micrometer stainless steel slits in the cylindrical body of the filters. In the case of the static basket filter, the polybutadiene clogged the filter rendering it inoperable.

In the case of the self-cleaning filter unit (as shown in FIG. 2), when run continuously, it was surprisingly found that a clog did not form and the filter remained operable. Particulate contaminates were successfully captured by the self-cleaning filter. The mechanized scrubber, comprised of a spring-loaded disk, was pushed along the inner surface of the cylindrical body at a timed interval, thus scraping the captured contaminates into the bottom of the cylindrical body. Periodically, a solenoid mechanism opened a purge value located in the bottom of the cylindrical body and contaminate was ejected into a waste container. The filter was surprisingly shown to reduce the average contamination level by 60%.

Furthermore, a reduction in visible surface defects (e.g., bumps, bubbles, and lumps) of over 95% was surprisingly achieved in downstream formed acrylonitrile-butadiene-styrene articles as determined by a composition analysis of customer-identified defects. The articles can be substantially free from visible surface defects. A surface of the article can have an average surface roughness value (Ra) of less than or equal to about 10 micrometers, for example, less than or equal to about 1 micrometer, for example, less than or equal to about 0.5 micrometers. The average surface roughness value (Ra) can be measured by any suitable method, for example, a method in accordance with ISO 4287:1997.

As demonstrated the method and system disclosed herein can provide a product with reduced crosslinking gels, coagulates, and agglomerate contaminates, higher monomer conversion, less fouling, corrosiveness, and final product defects, and reduced need for employing a short stop agent, monomer recycling, butadiene washing, butadiene distillation, styrene cleaning, and/or other cleaning of inert and/or retarding components. The method disclosed herein can provide a product with no substantial detectable amounts of gel, for example, less than 25 ppm. The method and system disclosed herein can provide a product wherein a substantial amount of the polymer has not been exposed to a crosslinking treatment and therefore does not suffer from restricted molecular mobility which may tend to limit the extension of the polymer under loading.

In general, the endpoints of all ranges directed to the same component or property are inclusive and independently combinable (e.g., ranges of "less than or equal to 25 wt%, or 5 wt% to 20 wt%," is inclusive of the endpoints and all intermediate values of the ranges of "5 wt% to 25 wt%," etc.). Disclosure of a narrower range or more specific group in addition to a broader range is not a disclaimer of the broader range or larger group. "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. "Or" means "and/or." The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

The modifier "about" used in connection with a quantity is inclusive of the stated value and has the meaning dictated by the context (e.g., includes the degree of error associated with measurement of the particular quantity). The notation "± 10%" means that the indicated measurement can be from an amount that is minus 10% to an amount that is plus 10% of the stated value. The terms "front", "back", "bottom", and/or "top" are used herein, unless otherwise noted, merely for convenience of description, and are not limited to any one position or spatial orientation. "Optional" or "optionally" means that the subsequently described event or circumstance can or cannot occur, and that the description includes instances where the event occurs and instances where it does not. Unless defined otherwise, technical and scientific terms used herein have the same meaning as is commonly understood by one of skill in the art to which this invention belongs. A "combination" is inclusive of blends, mixtures, alloys, reaction products, and the like.

## Claims

1. A method of forming articles from acrylonitrile-butadiene-styrene, the method comprising:
feeding a monomer stream comprising a petrochemical monomer into a reactor;
contacting the petrochemical monomer with a polymerization activator within the reactor to produce a polymerized stream comprising rubber, latex, or a combination thereof and withdrawing the polymerized stream from the reactor;
passing the polymerized stream through a filter to produce a filtered product stream, wherein the filter is a continuously self-cleaning filter, wherein the filter comprises a body, preferably corrosion resistant and cylindrical, comprising an inner surface, an outer surface, and openings having a diameter from 1 micrometer to 500 micrometers, wherein the polymerized stream is passed from the inner surface to the outer surface via the openings to remove a particulate contaminate from the polymerized stream, and a mechanized scrubber which contacts the inner surface of the body at a timed interval;
passing the filtered product stream through a grafting unit comprising acrylonitrile and styrene to produce acrylonitrile-butadiene-styrene; and
forming an article from the acrylonitrile-butadiene-styrene, wherein the article is an extruded sheet, a molded part, or a combination thereof.

2. The method of Claim 1, wherein a volumetric flow rate of the polymerized stream through the filter is from 0.5 cubic meters per second to 1.5 cubic meters per second.

3. The method of any of the preceding claims, further comprising storing the monomer stream, the polymerized stream, the filtered product stream, the acrylonitrile-butadiene-styrene, or a combination thereof, in a storage vessel.

4. The method of any of the preceding claims, wherein the filter comprises:
a body, preferably corrosion resistant and cylindrical, comprising an inner surface, an outer surface, and openings having a diameter from 1 micrometer to 500 micrometers, wherein the polymerized stream is passed from the inner surface to the outer surface via the openings to remove a particulate contaminate from the polymerized stream;
a mechanized scrubber which contacts the inner surface of the body at a timed interval; and
a mechanized valve which opens at a timed interval and is located at an end of the body.

5. The method of Claim 4, wherein the mechanized scrubber, the mechanized valve, or a combination thereof, comprises a solenoid mechanism, a spring loaded mechanism, a magnetic drive mechanism, or a combination comprising at least one of the foregoing.

6. The method of any of Claims 4-5, where the timed interval for the mechanized scrubber is from 0.5 hours to 2.5 hours, preferably from 1 hour to 1.5 hours.

7. The method of any of Claims 4-6, where the timed interval for the mechanized valve is from 1 hour to 5 hours, preferably from 3 hours to 4 hours.

8. The method of any of Claims 4-7, wherein the openings are from 30 micrometers to 70 micrometers in diameter, preferably 40 micrometers to 60 micrometers, more preferably from 45 micrometers to 55 micrometers.

9. The method of any of the preceding claims, wherein the petrochemical monomer comprises butadiene and the filtered product stream comprises greater than or equal to 99% polybutadiene by weight after passing through the filter, preferably greater than or equal to 99.9% polybutadiene by weight.

10. The method of any of the preceding claims, wherein the filtered product stream comprises less than or equal to 25 parts per million of a particulate contaminant by weight after passing through the filter, preferably less than or equal to 10 parts per million by weight, more preferably less than or equal to 5 parts per million by weight, more preferably less than or equal to 4 parts per million by weight.

11. The method of claim 10, wherein the particulate contaminant comprises crosslinked gel, agglomerated rubber particles, degraded rubber particles, fibrous material, coagulate, dirt, rust, or a combination comprising at least one of the foregoing, and wherein a diameter of a particulate contaminant particle is less than or equal to 10 micrometers, preferably less than or equal to 5 micrometers, preferably less than or equal to 1 micrometer as measured in accordance with accordance with ISO 13320:2020.

12. The method of any of the preceding claims, further comprising passing a volume of the filtered product stream through a screen to provide a secondary filtered product stream, wherein the volume of the filtered product stream is from 5 cubic decimeters to 30 cubic decimeters, preferably from 10 cubic decimeters to 20 cubic decimeters, more preferably from 14 cubic decimeters to 16 cubic decimeters.

13. The method of any of the preceding claims, wherein the article formed from the acrylonitrile-butadiene-styrene is an electronic device, an automotive part, or a combination thereof.

14. A system for forming articles from acrylonitrile-butadiene-styrene, the system comprising:
a monomer stream comprising a petrochemical monomer;
a reactor, wherein the petrochemical monomer is contacted with a polymerization activator within the reactor to produce a polymerized stream comprising rubber, latex, or a combination thereof;
a filter, wherein the polymerized stream is passed through the filter to produce a filtered product stream, wherein the filter is a continuously self-cleaning filter, wherein the filter comprises a body, preferably corrosion resistant and cylindrical, comprising an inner surface, an outer surface, and openings having a diameter from 1 micrometer to 500 micrometers, wherein the polymerized stream is passed from the inner surface to the outer surface via the openings to remove a particulate contaminate from the polymerized stream, and a mechanized scrubber which contacts the inner surface of the body at a timed interval;
a grafting unit, wherein the filtered product stream is passed through the grafting unit comprising acrylonitrile and styrene to produce acrylonitrile-butadiene-styrene; and
an extrusion unit, a molding unit, or a combination thereof, wherein an article is formed from the acrylonitrile-butadiene-styrene, wherein the article is an extruded sheet, a molded part, or a combination thereof.

## Patentansprüche

1. Verfahren zum Bilden von Artikeln aus Acrylnitril-Butadien-Styrol, wobei das Verfahren umfasst:
Zuführen eines Monomerstroms, der ein petrochemisches Monomer umfasst, in einen Reaktor;
Inkontaktbringen des petrochemischen Monomers mit einem Polymerisationsaktivator innerhalb des Reaktors, um einen polymerisierten Strom zu erzeugen, der Kautschuk, Latex oder eine Kombination davon umfasst, und Abziehen des polymerisierten Stroms aus dem Reaktor;
Leiten des polymerisierten Stroms durch einen Filter, um einen gefilterten Produktstrom zu erzeugen, wobei der Filter ein kontinuierlich selbstreinigender Filter ist, wobei der Filter einen Körper umfasst, bevorzugt korrosionsbeständig und zylindrisch, umfassend eine Innenoberfläche, eine Außenoberfläche und Öffnungen mit einem Durchmesser von 1 Mikrometer bis 500 Mikrometern, wobei der polymerisierte Strom von der Innenoberfläche zu der Außenoberfläche über die Öffnungen geleitet wird, um eine partikelförmige Verunreinigung aus dem polymerisierten Strom zu entfernen, und einen mechanisierten Wäscher, der mit der Innenoberfläche des Körpers in einem Zeitintervall in Kontakt steht;
Leiten des gefilterten Produktstroms durch eine Pfropfeinheit, die Acrylnitril und Styrol umfasst, um Acrylnitril-Butadien-Styrol zu erzeugen; und
Bilden eines Artikels aus dem Acrylnitril-Butadien-Styrol, wobei der Artikel ein extrudiertes Blatt, ein Formteil oder eine Kombination davon ist.

2. Verfahren nach Anspruch 1, wobei eine volumetrische Strömungsrate des polymerisierten Stroms durch den Filter 0,5 Kubikmeter pro Sekunde bis 1,5 Kubikmeter pro Sekunde beträgt.

3. Verfahren nach einem der vorstehenden Ansprüche, weiter umfassend Speichern des Monomerstroms, des polymerisierten Stroms, des gefilterten Produktstroms, des Acrylnitril-Butadien-Styrols oder einer Kombination davon in einem Lagerbehälter.

4. Verfahren nach einem der vorstehenden Ansprüche, wobei der Filter umfasst:
einen Körper, bevorzugt korrosionsbeständig und zylindrisch, umfassend eine Innenoberfläche, eine Außenoberfläche und Öffnungen mit einem Durchmesser von 1 Mikrometer bis 500 Mikrometern, wobei der polymerisierte Strom von der Innenoberfläche zu der Außenoberfläche über die Öffnungen geleitet wird, um eine partikelförmige Verunreinigung aus dem polymerisierten Strom zu entfernen;
einen mechanisierten Wäscher, der mit der Innenoberfläche des Körpers in einem Zeitintervall in Kontakt steht; und
ein mechanisiertes Ventil, das sich in einem Zeitintervall öffnet und an einem Ende des Körpers gelegen ist.

5. Verfahren nach Anspruch 4, wobei der mechanisierte Wäscher, das mechanisierte Ventil oder eine Kombination davon einen Magnetmechanismus, einen federbelasteten Mechanismus, einen magnetischen Antriebsmechanismus oder eine Kombination umfasst, die mindestens einen der vorgenannten umfasst.

6. Verfahren nach einem der Ansprüche 4-5, wobei das Zeitintervall für den mechanisierten Wäscher 0,5 Stunden bis 2,5 Stunden, bevorzugt 1 Stunde bis 1,5 Stunden beträgt.

7. Verfahren nach einem der Ansprüche 4-6, wobei das Zeitintervall für das mechanische Ventil 1 Stunde bis 5 Stunden, bevorzugt 3 Stunden bis 4 Stunden beträgt.

8. Verfahren nach einem der Ansprüche 4-7, wobei die Öffnungen einen Durchmesser von 30 Mikrometern bis 70 Mikrometern, bevorzugt 40 Mikrometern bis 60 Mikrometern, bevorzugter von 45 Mikrometern bis 55 Mikrometern aufweisen.

9. Verfahren nach einem der vorstehenden Ansprüche, wobei das petrochemische Monomer Butadien umfasst und der gefilterte Produktstrom nach Leiten durch den Filter mehr als oder gleich 99 Gew.-% Polybutadien, bevorzugt mehr als oder gleich 99,9 Gew.-% Polybutadien umfasst.

10. Verfahren nach einem der vorstehenden Ansprüche, wobei der gefilterte Produktstrom weniger als oder gleich 25 Gewichtsteile pro Million einer partikelförmigen Verunreinigung nach Leiten durch den Filter, bevorzugt weniger als oder gleich 10 Gewichtsteile pro Million, bevorzugter weniger als oder gleich 5 Gewichtsteile pro Million, bevorzugter weniger als oder gleich 4 Gewichtsteile pro Million umfasst.

11. Verfahren nach Anspruch 10, wobei die partikelförmige Verunreinigung vernetztes Gel, agglomerierte Kautschukpartikel, abgebaute Kautschukpartikel, faseriges Material, Koagulat, Schmutz, Rost oder eine Kombination umfasst, die mindestens eines der vorgenannten umfasst, und wobei ein Durchmesser eines partikelförmigen Verunreinigungspartikels kleiner als oder gleich 10 Mikrometer, bevorzugt kleiner als oder gleich 5 Mikrometer, bevorzugt kleiner als oder gleich 1 Mikrometer ist, gemessen in Übereinstimmung mit ISO 13320:2020.

12. Verfahren nach einem der vorstehenden Ansprüche, weiter umfassend Leiten eines Volumens des gefilterten Produktstroms durch ein Sieb, um einen sekundären gefilterten Produktstrom bereitzustellen, wobei das Volumen des gefilterten Produktstroms 5 Kubikdezimeter bis 30 Kubikdezimeter, bevorzugt 10 Kubikdezimeter bis 20 Kubikdezimeter, bevorzugter 14 Kubikdezimeter bis 16 Kubikdezimeter beträgt.

13. Verfahren nach einem der vorstehenden Ansprüche, wobei der aus dem Acrylnitril-Butadien-Styrol gebildete Artikel eine elektronische Vorrichtung, ein Kraftfahrzeugteil oder eine Kombination davon ist.

14. System zum Bilden von Artikeln aus Acrylnitril-Butadien-Styrol, wobei das System umfasst:
einen Monomerstrom, der ein petrochemisches Monomer umfasst;
einen Reaktor, wobei das petrochemische Monomer mit einem Polymerisationsaktivator innerhalb des Reaktors in Kontakt gebracht wird, um einen polymerisierten Strom zu erzeugen, der Kautschuk, Latex oder eine Kombination davon umfasst;
einen Filter, wobei der polymerisierte Strom durch den Filter geleitet wird, um einen gefilterten Produktstrom zu erzeugen, wobei der Filter ein kontinuierlich selbstreinigender Filter ist, wobei der Filter einen Körper umfasst, bevorzugt korrosionsbeständig und zylindrisch, umfassend eine Innenoberfläche, eine Außenoberfläche und Öffnungen mit einem Durchmesser von 1 Mikrometer bis 500 Mikrometern, wobei der polymerisierte Strom von der Innenoberfläche zu der Außenoberfläche über die Öffnungen geleitet wird, um eine partikelförmige Verunreinigung aus dem polymerisierten Strom zu entfernen, und einen mechanisierten Wäscher, der mit der Innenoberfläche des Körpers in einem Zeitintervall in Kontakt steht;
eine Pfropfeinheit, wobei der gefilterte Produktstrom durch die Pfropfeinheit, die Acrylnitril und Styrol umfasst, geleitet wird, um Acrylnitril-Butadien-Styrol zu erzeugen; und
eine Extrusionseinheit, eine Formeinheit oder eine Kombination davon, wobei ein Artikel aus dem Acrylnitril-Butadien-Styrol gebildet wird, wobei der Artikel ein extrudiertes Blatt, ein Formteil oder eine Kombination davon ist.

## Revendications

1. Procédé de formation d'articles à partir d'acrylonitrile-butadiène-styrène, le procédé comprenant :
l'introduction d'un flux de monomère comprenant un monomère pétrochimique dans un réacteur ;
la mise en contact du monomère pétrochimique avec un activateur de polymérisation dans le réacteur pour produire un flux polymérisé comprenant du caoutchouc, du latex ou une combinaison de ceux-ci et le retrait du flux polymérisé du réacteur;
le passage du flux polymérisé à travers un filtre pour produire un flux de produit filtré, dans lequel le filtre est un filtre autonettoyant en continu, dans lequel le filtre comprend un corps, de préférence résistant à la corrosion et cylindrique, comprenant une surface interne, une surface externe et des ouvertures présentant un diamètre de 1 micromètre à 500 micromètres, dans lequel le flux polymérisé passe de la surface interne à la surface externe via les ouvertures pour éliminer un contaminant particulaire du flux polymérisé, et un épurateur mécanisé qui entre en contact avec la surface interne du corps à un intervalle temporisé ;
le passage du flux de produit filtré à travers une unité de greffage comprenant de l'acrylonitrile et du styrène pour produire de l'acrylonitrile-butadiène-styrène ; et
la formation d'un article à partir de l'acrylonitrile-butadiène-styrène, dans lequel l'article est une feuille extrudée, une pièce moulée ou une combinaison de celles-ci.

2. Procédé selon la revendication 1, dans lequel le débit volumétrique du flux polymérisé à travers le filtre est de 0,5 mètre cube par seconde à 1,5 mètre cube par seconde.

3. Procédé selon l'une quelconque des revendications précédentes, comprenant en outre le stockage du flux de monomère, du flux polymérisé, du flux de produit filtré, de l'acrylonitrile-butadiène-styrène, ou d'une combinaison de ceux-ci, dans un récipient de stockage.

4. Procédé selon l'une quelconque des revendications précédentes, dans lequel le
filtre comprend :
un corps, de préférence résistant à la corrosion et cylindrique, comprenant une surface interne, une surface externe et des ouvertures présentant un diamètre de 1 micromètre à 500 micromètres, dans lequel le flux polymérisé passe de la surface interne à la surface externe via les ouvertures pour éliminer un contaminant particulaire du flux polymérisé ;
un épurateur mécanisé qui entre en contact avec la surface interne du corps à un intervalle temporisé ; et
une vanne mécanisée qui s'ouvre à un intervalle temporisé et qui est située sur une extrémité du corps.

5. Procédé selon la revendication 4, dans lequel l'épurateur mécanisé, la vanne mécanisée, ou une combinaison de ceux-ci, comprend un mécanisme solénoïde, un mécanisme à ressort, un mécanisme d'entraînement magnétique ou une combinaison comprenant au moins l'un des éléments précédents.

6. Procédé selon l'une quelconque des revendications 4-5, dans lequel l'intervalle temporisé pour l'épurateur mécanisé est de 0,5 heure à 2,5 heures, de préférence de 1 heure à 1,5 heure.

7. Procédé selon l'une quelconque des revendications 4-6, dans lequel l'intervalle temporisé pour la vanne mécanisée est de 1 heure à 5 heures, de préférence de 3 heures à 4 heures.

8. Procédé selon l'une quelconque des revendications 4-7, dans lequel les ouvertures présentent un diamètre de 30 micromètres à 70 micromètres, de préférence de 40 micromètres à 60 micromètres, plus préférentiellement de 45 micromètres à 55 micromètres.

9. Procédé selon l'une quelconque des revendications précédentes, dans lequel le monomère pétrochimique comprend du butadiène et le flux de produit filtré comprend 99 % en poids ou plus de polybutadiène après passage à travers le filtre, de préférence 99,9 % de polybutadiène en poids ou plus.

10. Procédé selon l'une quelconque des revendications précédentes, dans lequel le flux de produit filtré comprend 25 parties par million ou moins d'un contaminant particulaire en poids après passage à travers le filtre, de préférence 10 parties par million en poids ou moins, plus préférentiellement 5 parties par million en poids ou moins, plus préférentiellement 4 parties par million en poids ou moins.

11. Procédé selon la revendication 10, dans lequel le contaminant particulaire comprend un gel réticulé, des particules de caoutchouc agglomérées, des particules de caoutchouc dégradées, un matériau fibreux, un coagulat, de la saleté, de la rouille ou une combinaison comprenant au moins un des éléments précédents, et dans lequel un diamètre d'une particule de contaminant particulaire est inférieur ou égal à 10 micromètres, de préférence inférieur ou égal à 5 micromètres, de préférence inférieur ou égal à 1 micromètre, tel que mesuré conformément à la norme ISO 13320:2020.

12. Procédé selon l'une quelconque des revendications précédentes, comprenant en outre le passage d'un volume du flux de produit filtré à travers un tamis pour fournir un flux de produit filtré secondaire, dans lequel le volume du flux de produit filtré est de 5 décimètres cubes à 30 décimètres cubes, de préférence de 10 décimètres cubes à 20 décimètres cubes, plus préférentiellement de 14 décimètres cubes à 16 décimètres cubes.

13. Procédé selon l'une quelconque des revendications précédentes, dans lequel l'article formé à partir d'acrylonitrile-butadiène-styrène est un dispositif électronique, une pièce automobile ou une combinaison de ceux-ci.

14. Système pour former des articles à partir d'acrylonitrile-butadiène-styrène, le système comprenant :
un flux de monomère comprenant un monomère pétrochimique ;
un réacteur, dans lequel le monomère pétrochimique entre en contact avec un activateur de polymérisation dans le réacteur pour produire un flux polymérisé comprenant du caoutchouc, du latex ou une combinaison de ceux-ci ;
un filtre, dans lequel le flux polymérisé passe à travers le filtre pour produire un flux de produit filtré, dans lequel le filtre est un filtre autonettoyant en continu, dans lequel le filtre comprend un corps, de préférence résistant à la corrosion et cylindrique, comprenant une surface interne, une surface externe et des ouvertures présentant un diamètre de 1 micromètre à 500 micromètres, dans lequel le flux polymérisé passe de la surface interne à la surface externe via les ouvertures pour éliminer un contaminant particulaire du flux polymérisé, et un épurateur mécanisé qui entre en contact avec la surface interne du corps à un intervalle temporisé ;
une unité de greffage, dans lequel le flux de produit filtré passe à travers l'unité de greffage comprenant de l'acrylonitrile et du styrène pour produire de l'acrylonitrile-butadiène-styrène ; et
une unité d'extrusion, une unité de moulage ou une combinaison de celles-ci, dans lequel un article est formé à partir d'acrylonitrile-butadiène-styrène, dans lequel l'article est une feuille extrudée, une pièce moulée ou une combinaison de celles-ci.
